# EUROPEAN PATENT APPLICATION

(11) **EP 4 024 556 A1**
(43) Date of publication of application: **06.07.2022**
(21) Application number: 21218198.6
(22) Date of filing: 29.12.2021
(51) Int. Cl.: H01M 10/0587, H01M 10/04, H01M 10/052

(54) **WINDING STACKED SECONDARY CELLS**

(30) Priority: 30.12.2020 US 202063132082 P
(71) Applicant: Solaredge Technologies Ltd., Herzeliya 4673335 (IL)
(72) Inventor: LANG, Joel, 4673335 Herzeliya (IL); CURLAND, Sofia, 4673335 Herzeliya (IL)
(74) Representative: V.O.

(57) **Abstract**

Disclosed are manufacturing methods, devices, and systems for winding electrodes and separators to form stacked cells. Winding of stacked cells may comprise printing markers, such as fiducial markers, on an electrode foil. Active materials may be printed on the electrodes aligned with the fiducial markers, and the active materials may be dried and/or baked. Several electrodes may be processed together on one foil to create several cells. One or more anode electrodes and cathode electrodes may be wound around a mandrel with separators between them. The one or more wound-stacked cells may be removed from the mandrel and may be further processed to create secondary cells.

## Description

The following disclosure relates to the field of lithium ion cell production, and more specifically to new manufacturing process for increased speed of production of secondary battery pouch cells.

Batteries may be used in apparatuses such as automobiles, robots, satellites, notebook computers, cameras, mobile phones, MP3 players, etc. Batteries may be classified as primary batteries or secondary batteries, where secondary batteries are capable of storing energy using repeated charging and discharging. Existing commercially available secondary batteries include, for example, nickel-cadmium batteries, nickel-hydride batteries, zinc batteries, and lithium batteries. Among them, lithium secondary batteries may have a low self-discharging rate and high energy density. High energy density battery systems are increasingly valuable in various consumer fields due to their greater energy levels, high specific capacity, and cycle characteristics.

A lithium secondary battery may comprise electrochemical cells, wherein the cells may comprise a cathode, an anode, a separator, and an electrolyte disposed between the cathode and the anode. Lithium secondary batteries may contain a lithium-based oxide as a negative electrode active material and a carbon-based material as a positive electrode active material. Each battery may include an electrode assembly such as a positive electrode current collector and a negative electrode current collector. The current collectors may be respectively coated with a positive electrode (anode) active material and a negative electrode (cathode) active material, and may be disposed with a separator interposed therebetween. An outer casing may hermetically seal therein the electrode assembly together with an electrolyte solution. Lithium secondary batteries may be classified into different types, such as a lithium ion battery (LIB), a polymer lithium ion battery (PLIB), or the like, depending on the types of the anode active material and the cathode active material used therein.

A single battery cell may be used as a secondary battery, or two or more battery cells may be connected in series or in parallel to form a battery module. The battery module may output higher power or store more energy than a single battery cell. Large equipment may use a sutiably large battery module. When high output power is needed, multiple battery cells may be connected in series or in parallel.

The following presents a simplified summary of some of the inventive concepts described therein. This summary is provided for illustrative purposes only and is not an extensive overview of the invention. It is not intended to identify key or critical elements, or to delineate the scope of the present disclosure.

The claimed invention is disclosed by the features of the independent claims. Further advantageous embodiments of the invention are disclosed by the features of the dependent claims.

Disclosed are manufacturing methods, devices, and systems for winding electrodes and separators to form stacked cells. Winding electrodes to form stacked cells may comprise printing markers, such as fiducial markers, on an electrode foil. Active materials may be printed on the electrodes aligned with the fiducial markers, and the active materials may be dried or baked. An anode foil with several electrodes and a cathode foil with the same number of electrodes may be processed together to create several cells. In some cases, the electrodes and separators may be adhered together by heat pressing, where the active material patches are aligned using the fiducial markers. One or more anode electrodes or cathode electrodes may be wound around a mandrel with separators between the anode and cathode active materials. The one or more wound cells may be removed from the mandrel and further processed by heat pressing, encasing, filling with electrolyte, aging, etc.

There is disclosed a battery comprising a separator; a first electrode with first active material patches printed on two sides of the first electrode; a second electrode with second active material patches printed on two sides of the second electrode, wherein the first electrode, the second electrode, and the separator between the first electrode and the second electrode, are wound together into a jellyroll, and wherein a spacing between the first active material patches and the second active material patches increases gradually from a center of the jellyroll to an exterior of the jellyroll.

A spacing at the center of the jellyroll may be between 0.1 and 1.5 millimeters (mm).

A spacing at the exterior of the jellyroll may be between 3 and 60 mm.

The first electrode may comprise two additional active material patches that precede the first active material patches and are printed on a single side of the first electrode.

The second electrode may comprise two additional active material patches that follow the second active material patches and are printed on a single side of the second electrode.

The first electrode and the second electrode may be wound together starting at a same side of the center of the jellyroll.

The first electrode may be an anode and the second electrode may be a cathode.

The battery may be a secondary battery.

The first electrode and the second electrode may comprise prefolds between the first active material patches and the second active material patches.

The prefolds may comprise at least one of creases, perforations, dimples, or bends.

The bends may comprise a bending radius between 0.1 and 20 mm.

The bends may comprise a bending radius that is 0.1 mm at a start of the winding and is one-half of a thickness of the jellyroll at an end of the winding.

The bends may comprise a bending radius that is equal to the spacing divided by pi.

The first electrode and the second electrode may be wound together starting at opposite ends of the jellyroll and ending at the opposite ends of the jellyroll.

The battery may further comprise a second separator that is configured to wind the first electrode and the second electrode together starting at opposite ends of the jellyroll.

There is further disclosed a method for manufacturing secondary cells, comprising identifying, on an electrode foil, locations to wind the electrode foil around a single mandrel; marking the locations on the electrode foil using fiducial markers; printing a plurality of electrode active material patches on the electrode foil aligned according to the fiducial markers; baking the electrode active material patches; slitting the electrode foil into a plurality of electrodes comprising the fiducial markers; winding, using one or more separators, the plurality of electrodes around the single mandrel; producing, based on the winding, a plurailty of secondary cells; and separating the plurality of secondary cells from the single mandrel.

The method may further comprise prefolding the electrode foil based on the fiducial markers.

The method may further comprise laminating the plurality of electrodes together with the one or more separators.

The winding may be based on a placement of the fiducial markers.

The plurality of electrodes may comprise an anode and a cathode.

Some features are shown by way of example, and not by limitation, in the accompanying drawings. In the drawings, like numerals reference similar elements.
FIG. 1 shows an example electrode foil with active material patches.
FIG. 2 shows an example configuration of a wound and stacked cell.
FIG. 3 shows an example configuration of a wound and stacked cell.
FIG. 4 shows an example configuration of a wound and stacked cell.
FIG. 5 shows an example configuration of a wound and stacked cell.
FIG. 6 shows an example configuration of a wound and stacked cell.
FIG. 7 shows an example electrode foil with active material patches and fiducial markers.
FIG. 8 shows an example flowchart for a method of manufacturing a wound-stacked cell.
FIG. 9 shows an example electrode foil with active material patches and prefolds.
FIG. 10A shows an example electrode foil with active material patches and prefolds.
FIG. 10B shows an example electrode foil with active material patches and prefolds.
FIG. 11 shows an example electrode foil with active material patches and prefolds.
FIG. 12 shows an example side view of electrode foils with prefolds.
FIG. 13 shows an example top view of an electrode foil with prefolds.
FIG. 14 shows a flowchart of examples of manufacturing steps and intermediate products of wound-stacked cells.
FIG. 15 shows an example electrode foil with active material patches and tab cutouts.
FIG. 16 shows an example of a precursor product aligned for prismatic winding of a wound-stacked cell.
FIG. 17 shows an example of a precursor product being wound around a mandrel to produce a wound-stacked cell.

In the following description of the various embodiments, reference is made to the accompanying drawings, which form a part hereof, and in which is shown by way of illustration various embodiments in which the present disclosure may be practiced. It is to be understood that other embodiments may be utilized, and structural and functional modifications may be made without departing from the scope of the present disclosure. Unless defined otherwise, all technical and scientific terms used herein have the same meaning as commonly understood by one of ordinary skill in the art.

To facilitate the production and reliability of lithium ion batteries (such as primary or secondary lithium batteries), the cathode and/or anode materials may be printed on a current collector (such as a foil) in discontinuous patches. The distance between the patches may vary, which may allow for longer distances between the windings in the center (e.g., inner windings near the mandrel) and the periphery of the winding (e.g., outer windings). The printing may be single-sided or double-sided (e.g., printed on one side or printed on both sides of the collector). The distance between the patches at the center may be smaller than the distance between the patches at the edges. The distance from the patches to the center of the winding (e.g., a first winding) may be increased or configured so that as the anode and cathode patches are wound, the patches may align at overlapping locations on the mandrel or winding.

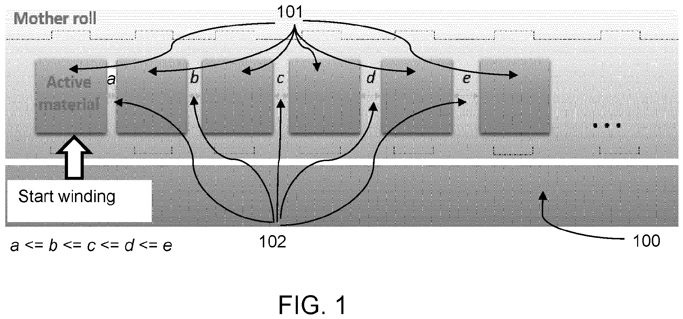

Reference is now made to FIG. 1, which shows an example of an electrode foil 100 with active material patches 101. Patches 101 may be printed on a mother roll. Patches 101 may be configured in size and position along the mother roll so that as the mother roll is wound (e.g., using an opposing electrode mother roll and separators) around a prismatic mandrel configured for winding stacked cells, the patches of both electrodes may align with the previously wound patches during each half revolution of the mandrel. For example, each patch may be the same size, and the space 102 between patches 101 may increase beginning with the first patch (e.g., where the winding starts) so that the distance between the first patch and the second patch may be at least the thickness of the first winding. For example, the distance between the second and third patches may be the thickness of the first and second windings together. As illustrated in FIG. 1, the distance between the first adjacent pair of patches may be denoted *a*, the distance between the second adjacent pair of patches may be denoted *b*, the distance between the third adjacent pair of patches may be denoted c, the distance between the fourth adjacent pair of patches may be denoted *d*, and the distance between the firfth adjacent pair of patches may be denoted e. As further illustrated in FIG. 1, *a* may be less than or equal to *b, b* may be less than or equal to c, *c* may be less than or equal to *d,* and *d* may be less than or equal to *e.* The mother roll may be configured to simultaneously wind several cells, where each cell may be wound from an adjacent electrode strip printed on the mother roll. The electrode strips of the mother roll may be separated (e.g., by slitting, laser, cutting, etc.) before the winding (e.g., using a slitting machine) or during the winding (e.g., as a part of the machine that winds the electrodes). The electrodes that are printed together on the mother roll may be separated, at least in part, after the winding by cutting the foil between simultaneously wound stacked cells and electrically connecting the tabs for each cell. For example, prior to winding, the electrodes may be separated over 80% of the connecting foil, and the remaining 20% connection may be removed after the winding to allow the winding of the different cells to be aligned as one. For example, prior to the winding, the foil connecting the electrodes may be separated between 10% to 95% over the length connecting foil, and the remaining 90% to 5% connection may be removed after the winding.

When the mother roll is wider than the number of cells that may be wound simultaneously, the mother roll may be trimmed or divided into bands. Each band may be wide enough to simultaneously wind each cell on a single mandrel. A mother roll may be marked with fiducials for aligning printing of active materials, cutting tabs, laminating, or monitoring the alignment of the cell during winding.

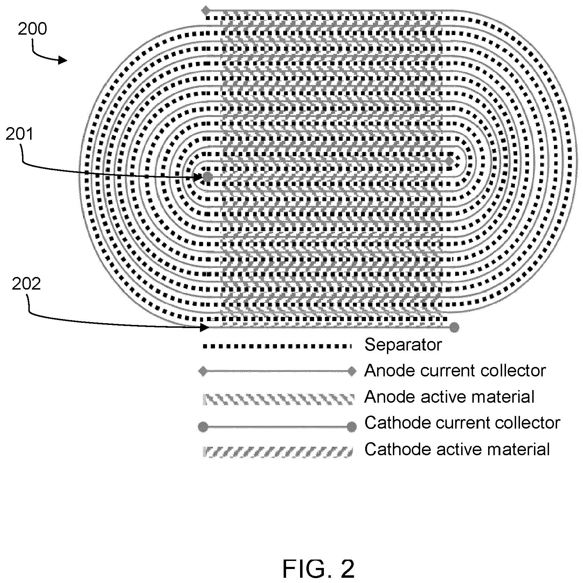

FIGS. 2-6 feature anode and cathode designations. However, the anode and cathode designations may be interchanged for each type of winding.

Reference is now made to FIG. 2 which shows an example configuration of a wound and stacked cell (e.g., jellyroll 200). The anode and cathode in this example may be wound together in jellyroll 200, starting at opposite sides of jellyroll 200 and ending at opposite ends. Patches in this example may be printed double-sided, but some patches (e.g., the last patch of each electrode) might not. The spacing between the active material patches (e.g., the anode and the cathode) may increase gradually from center 201 of te jellyroll 200 to exterior 202 of jellyroll 200. For example, the spacing at center 201 may be the thickness of one layer of jellyroll 200 multiplied by pi/2 (e.g., a spacing between 0.1 and 1.5 mm). For example, the spacing at exterior 202 may be the thickness of the complete jellyroll 200 multiplied by pi/2 (e.g., a spacing between 3mm (corresponding to an approximately 2 mm thick jellyroll 200) and 60 mm (corresponding to an approximately 40 mm thick jellyroll 200). The anode and cathode may start at opposite ends, but may end on the same end. The last two patches of one of the electrodes may be printed single-sided. The patches of the other electrode may be printed double-sided. Two patches of both electrodes together may be printed single-sided, and the others double-sided. A single separator may be used by doubling the length of a separator and beginning the winding of the separator from the middle. A single separator may be used to reduce the winding complexity.

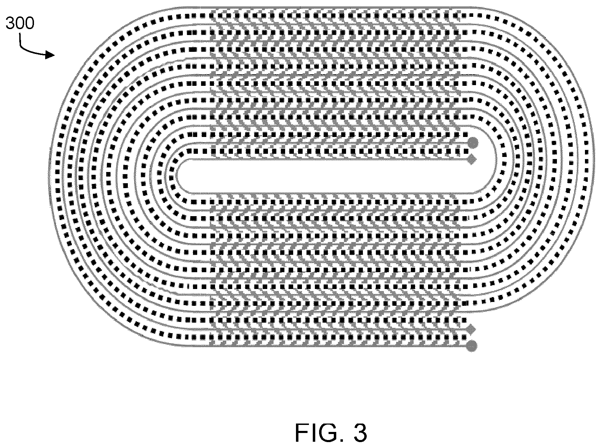

Reference is now made to FIG. 3, which shows an example configuration of a wound and stacked cell 300. The anode and cathode may be wound together in a prismatic jellyroll starting on the same side and ending on the same side. All patches may be printed double-sided. Some patches might not be printed double-sided, as may be true of the first two patches of one of the electrodes (e.g., either the anode or the cathode) and the last two patches of the opposing electrode (e.g., the cathode or the anode, respectively). The anode and cathode may start the winding at the same end, but may end the winding on opposite ends. The first two patches and last patch of the one electrode may be printed single-sided. The last patch of the other electrode may be printed single-sided, and all other patches may be printed double-sided. Four patches of both electrodes together may be printed single-sided, and the others double-sided.

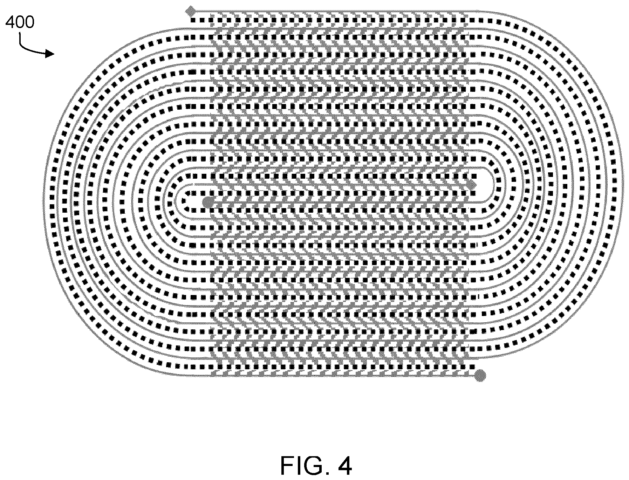

Reference is now made to FIG. 4, which shows an example configuration of a wound and stacked cell 400. The anode and cathode may be wound together in a prismatic jellyroll starting at opposite sides and ending at opposite ends, as similarly illustrated in FIG. 2, but may use two separators during the winding. All patches may be printed double-sided, except the last patch of each electrode or the last two patches of one electrode. Similar variants may exist corresponding to the example configurations of windings in FIGS. 2-6.

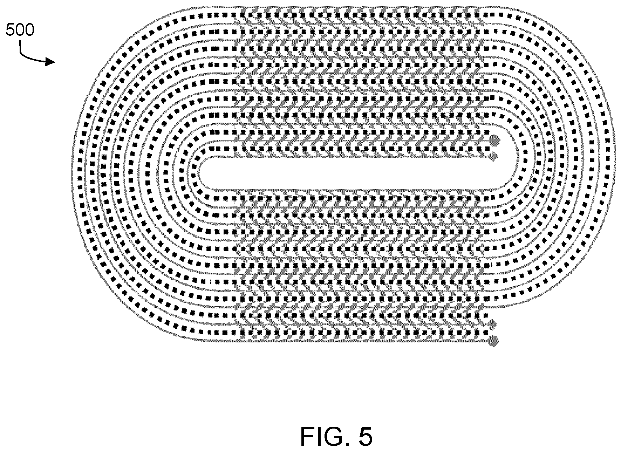

Reference is now made to FIG. 5, which shows an example configuration of a wound and stacked cell 500. The anode and cathode may be wound together in a prismatic jellyroll starting on the same side and ending on the same side. All patches may be printed single-sided.

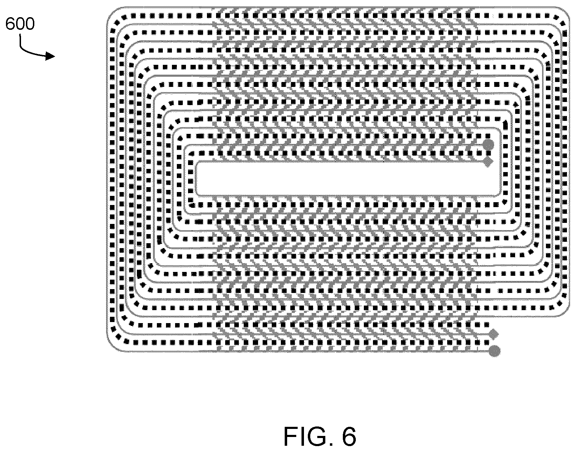

Reference is now made to FIG. 6, which shows an example configuration of a wound and stacked cell 600. The anode and cathode may be wound together in a prismatic jellyroll starting on the same side and ending on the same side using square bends or prefolds during the winding. In some examples, triangular or pentagonal bends may be used. All patches may be printed double-sided. The first two patches of one of the electrodes (e.g., either the anode or the cathode) and the last two patches of the opposing electrode (e.g., the cathode or the anode, respectively) may be printed single-sided. The bends of FIGS. 2-5 may be squares, as depicted in FIG. 6, or other shapes such as triangles, pentagons, hexagons, etc.

The foils may comprise laser marking or optical recognition fiducials to indicate the anode and the cathode correct overlapping locations and alignment for winding, tab cutting, prefolding or other creasing, laminating, or the like. The fiducial markings may be added to the foils prior to or during the electrode printing process using laser, ink, indentations, or the like. The fiducial markings may be used to align the incoming electrode patches along the axis of the mandrel during the winding. The fiducial markings may comprise higher contrast than active material patch edges (e.g., using ultraviolet (UV) ink and illuminating with UV light, using ink to create markers, using a laser to melt or perforate, using a laser to mark, or using a laser to change surface texture).

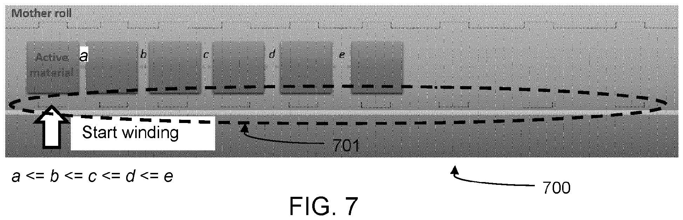

Reference is now made to FIG. 7, which shows an example electrode foil (e.g., electrode foil 700) with active material patches and fiducial markers (e.g., fiducial markers 701). Fiducial markers 701 may indicate the location of active material patches on the foil, the winding start patch, the increasing distances between patches along the roll, or the locations of tab cutouts.

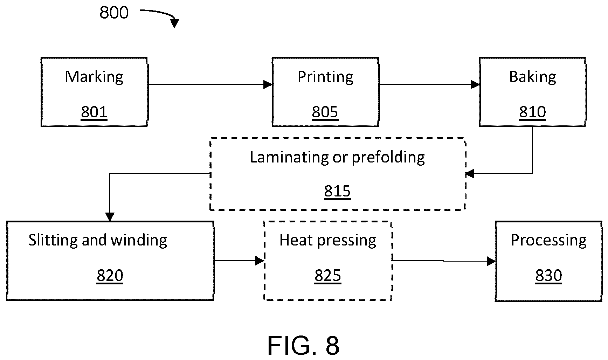

Reference is now made to FIG. 8, which shows an example flowchart 800 of a method for manufacturing a wound-stacked cell. At step 801, a mother roll may be marked with fiducials for aligning and positioning further processing steps. At step 805, anode active materials may be printed on the foil according to the fiducials. At step 810, the active materials may be baked. At step 815, laminating or prefolding may be performed according to the fiducials (e.g., applying a bend, dimple, crease, etc.). At step 820, slitting and winding may be performed according to the fiducials. At step 825, heat pressing may be performed. At step 830, further processing of the cell may be performed (e.g., encapsulating cells in a secondary pouch, filling with electrolyte, aging, or the like)..

A prefold may be situated between patches to assist in precision or controlled bending of the jellyroll during winding around the mandrel. The prefold may comprise several creases, bends, dimples, or perforations configured to control the position and pose of the current collector during winding or laminating. The prefolds may assist with winding around a non-round mandrel (e.g., a mandrel with a cross-section that may be rectangular, hexagonal, triangular, or the like). The prefold may comprise one or more creases, perforations, dimples, deformations, kiss-cuts, bendings, or the like. Sheet metal forming techniques may be used to create a plastic deformation prefold. For example, a press-brake may be used to cause a plastic deformation prefold to a foil. For example, perforating, forging, laser forming, water jet forming, or stamping may be used to cause a plastic deformation prefold to a foil.

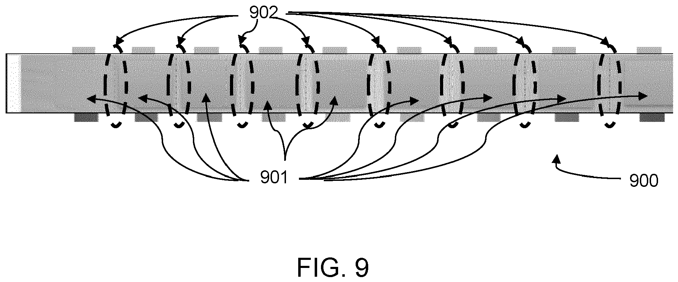

Reference is now made to FIG. 9, which shows an example electrode foil 900 with active material patches 901 and prefolds 902. Prefolds 902 may be plastic deformations to the foil 900 between the patches 901 of active material according to the designed shape and position of the bending during winding. Prefolds 902 may comprise bends, creases, perforations, etc. Prefolds 902 may align the windings between the two sides of the cell (e.g., around the bend) with the specifications for the cell. Patches 901 that are closer to the center of the winding may easily align with other means since the radius of the curvature may be larger. Patches 901 that are further from the center of the winding might not easily align with other means since the radius of the curvature may be smaller. One or more fiducial marks as at 701 of FIG. 7on foil 900 may be used to prefold foil 900. Fiducial mark 701 may designate the midpoint between the patches for placing a prefold. For example, two fiducial marks 701 may designate the placement of prefold 902. For example, a series of fiducial marks 701 may be used to position prefolds 902.

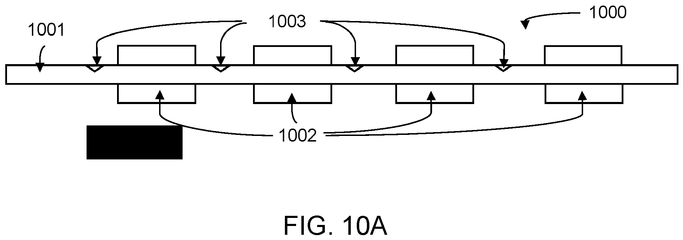

Reference is now made to FIG. 10A, which shows an example electrode foil 1000 with active material patches 1002 and creased prefolds 1003. Creased prefolds 1003 may be small depressions on current collector foil 1001, between patches 1002, that weaken the resistance to folding at crease prefolds 1003 and in the prefolded direction (e.g., folding upward, as illustrated in FIG. 10A). During the winding, creased prefolds 1003 may initiate the bending of current collector foil 1001 at creased prefolds 1003 before the bending of the surrounding foil. Creased prefolds 1003 may be on one side for winding and on both sides for z-folding.

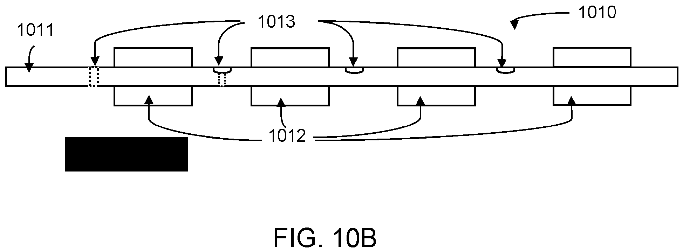

Reference is now made to FIG. 10B, which shows an example electrode foil 1010 with active material patches 1012 and dimpled or perforated prefolds 1013. Between each pair of adjacent patches 1012 on current collector foil 1011, one or more rows of dimples 1013 may be created to facilitate winding or folding. Perforations may be used together with dimples 1013 (e.g., as illustrated by the second dimple in FIG. 10B) or separate from dimples 1013 (e.g., as illustrated by the first dimple in FIG. 10B) .

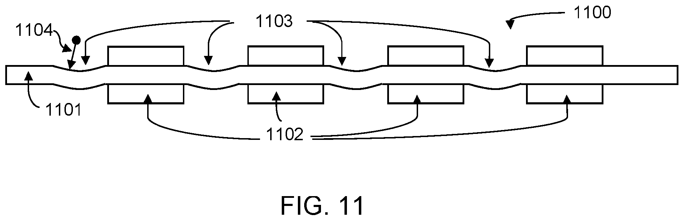

Reference is now made to FIG. 11, which shows an example electrode foil 1100 with active material patches 1102 and bent prefolds 1103. Generating bent prefolds 1103 may comprise bending current collector foil 1101 between two or more patches to cause a plastic deformation on current collector foil 1101 prior to winding. Bent prefolds 1103 may be described using bending radius 1104, where bending radius 1104 may be between 0.1mm and 20 mm. For example, bending radius 1104 may increase depending on the distance between the neighboring patches after being wound on the mandrel. For example, a bending radius of 20 mm may correspond to a jellyroll with a final thickness of 40 mm as bending radius 1104 may be equal to one-half of the thickness). The spacing between active material patches 1102 may be related to bending radius 1104 according to the following formula: spacing = bending radius ^{∗} pi (or beding radius = spacing / pi).

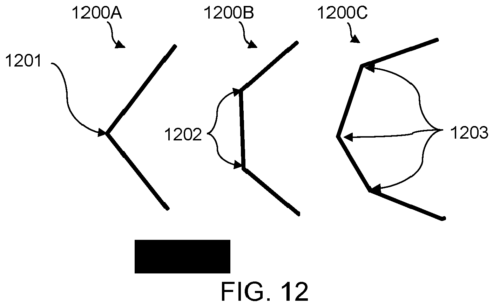

Reference is now made to FIG.12, which shows example side views of electrode foils 1200A, 1200B, and 1200C with prefolds 1201, 1202, and 1203, respectively. One or more plastic deformation prefolds 1200A, 1200B, and 1200C may be located along the length of the foil and between active material patches. As illustrated in FIG. 12, electrode foil 1200A may have one prefold location (e.g., 1201), electrode foil 1200B may have two prefold locations (e.g., 1202), and electrode foil 1200C may have three prefold locations (e.g., 1203). In some example, an electrode foil may comprise sufficient prefold locations between patches to cover the entirety of the foil. The distance between the prefolds may range between 0.5mm to 2mm. The multiple plastic deformation prefold locations may be deformed at once using a single die-set or in stages using multiple die-sets.

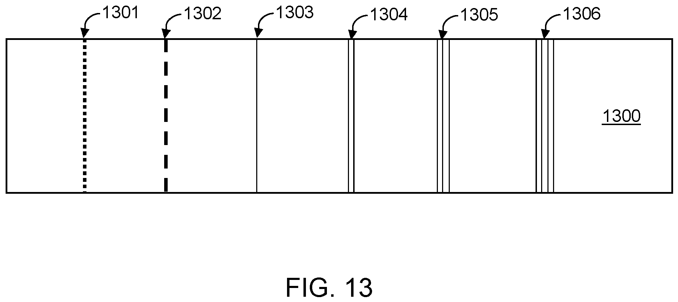

Reference is now made to FIG.13, which shows an example top view of an electrode foil 1300 with prefolds 1301 though 1306. Different types of prefolds may be used depending on the foil material, foil thickness, foil width, winding speed, or the like. Prefolds may plastically deform at least a part of the thickness of foil 1300. For example, a crease may plastically deform a foil that is 0.5mm thick at a depth of 0. 1 mm. A perforation may plastically deform (e.g., penetrate) the full thickness of the foil. Prefolds 1301-1306 may plastically deform at least part of the width of the foil. For example, a crease may plastically deform a 50 centimeter (cm) wide foil with creases that may be 1 cm long every 2.5 cms. For example, a crease or prebend may cross the entire width of a 50 cm wide foil. The possible prefold types include a perforated prefold 1301, a partially slitted prefold 1302, a single crease or dimple prefold 1303, a dual crease or dimple prefold 1304, a triple crease or dimple prefold 1305, a quadruple crease or dimple prefold 1306, or the like.

The mother roll may be simultaneously wound in parallel into several jellyrolls (e.g., cells) using a single mandrel. The number of individual cells wound together from a mother roll may be between 2 and 10. In some examples, the mother roll may be split into several precursor electrode strips, each comprising several cells. In some examples, the mother roll may be slit into individual cells and wound onto the mandrel to form several cells (e.g., substantially simultaneously).

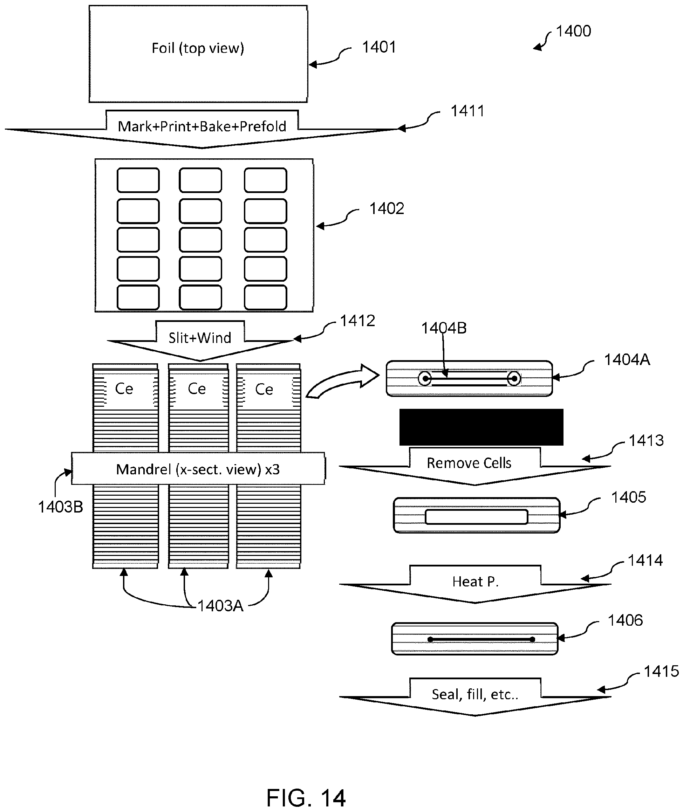

Reference is now made to FIG.14, which shows, in flowchart 1400, an example method for manufacturing wound-stacked cells and intermediate products of the method. At step 1411, foil 1401 (e.g., part of a mother roll) may be marked with fiducials, printed with active materials, baked, and prefolded to produce a winding precursor foil comprised of an electrode for one or more cells. At step 412, the multi-cell precursor foil 1402 may be slit, at least in part prior to winding, and wound on a single mandrel (e.g., mandrel 1403B). Mandrel 1403B may comprise a release configuration that allows the release and removal of cells from the mandrel. At step 1413, cells 1403A and 1404A may be removed from mandrel 1403B and 1404B. At step 1414, wound-stacked cell 1405 may be heat pressed to collapse the cavity that is left after removing, at step 1413, cells 1403A and 1404A from mandrel 1403B and 1404B. At step 1415, pressed cells 1406 may be further processed to create a secondary cell (e.g., by encasing, connecting, filling, sealing, aging, etc., pressed cells 1406).

Before or after the mother roll is slit, the foil between adjacent cells may be removed while forming tabs. This waste foil may be collected on a separate reel and may be discarded. The tab position distances along the roll may vary so that tabs may overlap after winding. Fiducial markers may be used to position the tabs during slitting.

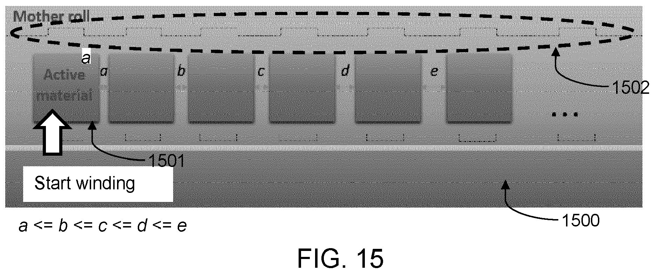

Reference is now made to FIG. 15, which shows an example electrode foil 1500 with active material patches 1501 and tab cutouts 1502. Tab cutouts 1502 may be cut prior to winding (e.g., during slitting) or after winding using scissors, air jet cutting, laser cutting, or the like. Tab cutouts 1502 may be cut according to fiducials (as at 701 of FIG. 7) marked on the foil.

Electrodes and separators (e.g., the anode and the accompanying separator, the cathode and the accompanying separator, or any other combination of electrode-separator) may be wound, compressed, or heat pressed together. The anode and cathode printing may require a certain leading offset of the lamination, foil(s), or separator so that the anode and cathode overlap correctly during the first wind. The stacked strips of the precursor electrode strips may run through a heated laminating roll to mechanically and chemically connect the anode, separator(s), and cathode. When laminating, the blank material between patches may be different lengths. The extra length may be managed to limit uncontrolled bending or folding during winding (e.g., by creasing or prefolding the longer lengths of foil or separator).

The first winding and mandrel setup may require a lead foil for attaching to a mandrel. Lead material may comprise a length of foil to attach to an anchor point on the mandrel. The length of foil may comprise a cutout shape configured to secure the electrode to the mandrel prior to winding. For example, the electrode may comprise between 1 and 10 centimeters of bare foil prior to the first electrode. The length of the bare foil prior to the first electrode may comprise a shape configured to attach to the mandrel. For example, two electrodes and two separators may be attached to the mandrel using leading lengths (e.g., a first separator between the electrodes and a second separator adjacent to one of the electrodes). The electrodes and separators may be wound together and the leading lengths may be removed prior to, during, or after the removal of the jellyroll(s) from the mandrel.

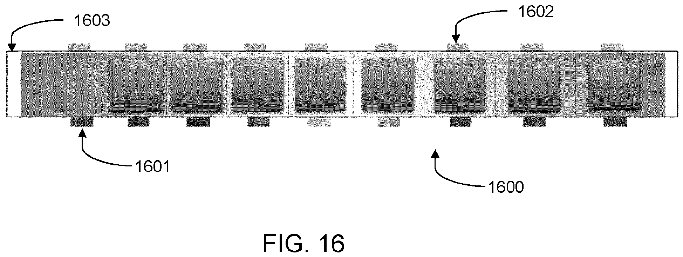

Reference is now made to FIG. 16, which shows precursor product 1600 aligned for prismatic winding to generate a wound-stacked cell. Precursor product 1600 may comprise anode 1601, cathode 1602, and separators 1603. Prefolds may provide alignment of the foil between patches in the flat configuration prior to winding, such that during winding some of the prefolds may further plastically deform the foil. Plastic deformation of the foil may be detected by visualizing grain lines along the cross section of the foil (e.g., using etching, x-ray diffraction, or the like).

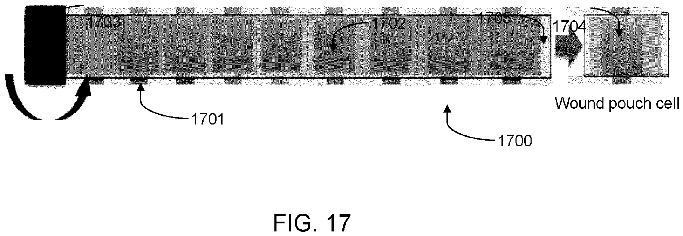

Reference is now made to FIG. 17, which shows precursor product 1700 being wound around mandrel 1703 to produce wound-stacked cell 1704. Precursor product 1700 may comprise anode 1701, cathode 1702, and separators 1705. The stacked cells may be wound around mandrel 1703 from one end using a lead foil or using a foil retaining means. Wound-stacked cell 1704 may be encased (e.g., in a pouch) and prepared for use as a secondary pouch cell.

Although the subject matter has been described in language specific to structural features or methodological acts, it is to be understood that the subject matter defined in the appended claims is not necessarily limited to the specific features or acts described above. Rather, the specific features and acts described above are disclosed as example forms of implementing the claims.

Clauses:
Clause 1. A battery comprising:
   a separator;
      a first electrode with first active material patches printed on two sides of the
   first electrode;
      a second electrode with second active material patches printed on two sides of
   the second electrode,
      wherein the first electrode and the second electrode are wound together with the separator therebetween in a jellyroll, and wherein a spacing between the first active material patches and the second active material patches increases gradually from a center of the jellyroll to an exterior of the jellyroll.
Clause 2. The battery of clause 1, wherein the spacing at the center of the jellyroll is between 0.1 and 1.5 millimeters (mm).
Clause 3. The battery of any one of clauses 1 to 2, wherein the spacing at the exterior of the jellyroll is between 3 and 60 mm.
Clause 4. The battery of any one of clauses 1 to 3, wherein the first electrode comprises two leading active material patches that precede the first active material patches and are printed on a single side of the first electrode.
Clause 5. The battery of any one of clauses 1 to 4, wherein the second electrode comprises two trailing active material patches that follow the second active material patches and are printed on a single side of the second electrode.
Clause 6. The battery of any one of clauses 1 to 5, wherein the first electrode and the second electrode are wound together starting at a same side of the center of the jellyroll.
Clause 7. The battery of any one of clauses 1 to 6, wherein the first electrode is an anode and the second electrode is a cathode.
Clause 8. The battery of any one of clauses 1 to 7, wherein the battery is a secondary battery.
Clause 9. The battery of any one of clauses 1 to 8, wherein the first electrode or the second electrode comprise prefolds between the first active material patches or the second active material patches.
Clause 10. The battery of any one of clauses 1 to 9, wherein the prefolds comprise at least one of creases, perforations, dimples, or bends.
Clause 11. The battery of clause 10, wherein the bends comprise a bending radius between 0.1 and 20 mm.
Clause 12. The battery of clause 10, wherein the bends comprise a bending radius that increases from 0.1 mm at the starting of the winding to a size equal to a final jellyroll thickness divided by two at the end of the winding.
Clause 13. The battery of clause 10, wherein the bends comprise a bending radius equal to the spacing between active material patches divided by pi.
Clause 14. The battery of any one of clauses 1 to 13, wherein:
   a first two patches or a last two patches of the plurality of first active material patches are printed on a single side of the first electrode, and
   one or more other patches of the plurality of first active material patches are printed on two sides of the first electrode.
Clause 15. The battery of any one of clauses 1 to 14, wherein:
   a first two patches or a last two patches of the plurality of second active material patches are printed on a single side of the second electrode, and
   one or more other patches of the plurality of second active material patches are printed on two sides of the second electrode.
Clause 16. A secondary battery comprising:
   a first electrode with first active material patches printed on two sides of the first electrode, wherein a last patch of the first active material patches is printed on a single side of the first electrode; and
   a second electrode with second active material patches printed on two sides of the second electrode, wherein a last patch of the second active material patches is printed on a single side of the second electrode, and
      wherein the first electrode and the second electrode are wound together in a jellyroll starting at opposite ends of the jellyroll.
Clause 17. The secondary battery of clause 16, wherein a spacing at a center of the jellyroll is between 0.1 and 1.5 millimeters (mm).
Clause 18. The secondary battery of any one of clauses 16 to 17, wherein a spacing at an exterior of the jellyroll is between 3 and 60 mm.
Clause 19. The secondary battery of any one of clauses 16 to 18, wherein a first two patches of the first active material patches are printed on the single side of the first electrode.
Clause 20. The secondary battery of any one of clauses 16 to 19, wherein a first two patches of the second active material patches are printed on the single side of the second electrode.
Clause 21. The secondary battery of any one of clauses 16 to 20, wherein first electrode and the second electrode are wound together starting at a same side of the center of the jellyroll.
Clause 22. The secondary battery of any one of clauses 16 to 21, wherein the first electrode is an anode and the second electrode is a cathode.
Clause 23. The secondary battery of any one of clauses 16 to 22, wherein the first electrode or the second electrode comprise prefolds between the first active material patches or the second active material patches.
Clause 24. The secondary battery of any one of clauses 16 to 23, wherein the prefolds comprise at least one of creases, perforations, dimples, or bends.
Clause 25. The secondary battery of clause 24, wherein the bends are associated with a bending radius between 0.1 and 20 mm.
Clause 26. The secondary battery of clause 24, wherein the bends comprise a bending radius that increases from 0.1 mm at the starting of the winding to a size equal to a final jellyroll thickness divided by two at the end of the winding.
Clause 27. The secondary battery of clause 24, wherein the bends comprise a bending radius equal to the spacing between the first active material patches and the second active material patches divided by pi.
Clause 28. The secondary battery of any one of clauses 16 to 27, wherein:
   a first two patches or a last two patches of the plurality of first active material patches are printed on a single side of the first electrode, and
   one or more other patches of the plurality of first active material patches are printed on two sides of the first electrode.
Clause 29. The secondary battery of any one of clauses 16 to 27, wherein:
   a first two patches or a last two patches of the plurality of second active material patches are printed on a single side of the second electrode, and
   one or more other patches of the plurality of second active material patches are printed on two sides of the second electrode.
Clause 30. A method for manufacturing secondary cells, comprising:
   marking a foil with fiducials at positions aligned with a winding;
   printing a plurality of electrode active material patches on the foil aligned with the fiducials;
   baking the electrode active material;
   slitting the foil into a plurality of electrodes aligned with the fiducials;
   winding the plurality of electrodes with one or more separators on a single mandrel, thereby producing a plurailty of secondary cells; and
   separating the plurality of secondary cells from the single mandrel.
Clause 31. The method of clause 30, further comprising the step of prefolding the foil according to the fiducials.
Clause 32. The method of any one of clauses 30 to 31, further comprising the step of laminating the plurality of electrodes together with the one or more separators.
Clause 33. The method of any one of clauses 30 to 32, wherein the winding is performed in alignment with the fiducials.
Clause 34. The method of any one of clauses 30 to 33, wherein the plurality of electrodes comprises an anode and a cathode.
Clause 35. An apparatus comprising:
   an electrode foil for a secondary cell comprising:
      a plurality of patches of active electrode material, wherein the plurality of patches are discontinuously arranged along a length of the foil, and
         wherein a separation distance between adjacent patches, of the plurality of patches, increases from one end of the length to an other end of the length; and
      a plurality of prefolds, wherein each prefold of the plurality of prefolds is located between the adjacent patches.
Clause 36. An apparatus for manufacturing secondary cells comprising:a mandrel configured for simultaneously winding two or more secondary cells.
Clause 37. A method for manufacturing secondary cells comprising:
   marking a foil with a plurality of fiducial markers; and
   cutting tabs in the foil according to the plurality of fiducial markers.
Clause 38. A secondary battery comprising:
   a separator;
   a first electrode with first active material patches printed thereon;
   a second electrode with second active material patches printed thereon;
   wherein the first electrode and the second electrode are wound together in a prismatic jellyroll with the separator therebetween, wherein each of the first electrode and the second electrode start their respective windings from opposite sides of the prismatic jellyroll, and wherein a spacing between the first active material patches and the second active material patches increases gradually from a center of the prismatic jellyroll to an exterior of the prismatic jellyroll.
Clause 39. The secondary battery of clause 38, wherein the spacing at the center of the prismatic jellyroll is between 0.1 and 1.5 millimeters (mm).
Clause 40. The secondary battery of any one of clauses 38 to 39, wherein the spacing at the exterior of the prismatic jellyroll is between 3 and 60 mm.
Clause 41. The secondary battery of any one of clauses 38 to 40, wherein a first two patches of the first active material patches are printed on a single side of the first electrode
Clause 42. The secondary battery of any one of clauses 38 to 41, wherein a last two patches of the second active material patches are printed on a single side of the second electrode
Clause 43. The secondary battery of any one of clauses 38 to 42, wherein the first electrode and the second electrode are wound together starting at a same side of the center of the prismatic jellyroll.
Clause 44. The secondary battery of any one of clauses 38 to 43, wherein the first electrode is an anode and the second electrode is a cathode.
Clause 45. The secondary battery of any one of clauses 38 to 44, wherein the first electrode or the second electrode comprise prefolds between the first active material patches or the second active material patches.
Clause 46. The secondary battery of any one of clauses 38 to 45, wherein the prefolds comprise at least one of creases, perforations, dimples, or bends.
Clause 47. The secondary battery of clause 46, wherein the bends comprise a bending radius between 0.1 and 20 mm.
Clause 48. The secondary battery of clause 46, wherein the bends comprise a bending radius that increases from 0.1 mm at the starting of the winding to a size equal to a final jellyroll thickness divided by two at the end of the winding.
Clause 49. The secondary battery of clause 46, wherein the bends comprise a bending radius equal to the spacing between active material patches divided by pi.
Clause 50. The secondary battery of any one of clauses 38 to 49, wherein:
   a first two patches or a last two patches of the plurality of first active material patches are printed on a single side of the first electrode, and
   one or more other patches of the plurality of first active material patches are printed on two sides of the first electrode.
Clause 51. The secondary battery of any one of clauses 38 to 50, wherein:
   a first two patches or a last two patches of the plurality of second active material patches are printed on a single side of the second electrode, and
   one or more other patches of the plurality of second active material patches are printed on two sides of the second electrode.

## Claims

1. A battery comprising:
a separator;
a first electrode with first active material patches printed on two sides of the first electrode;
a second electrode with second active material patches printed on two sides of the second electrode, and
wherein the first electrode, the second electrode, and the separator between the first electrode and the second electrode, are wound together into a jellyroll, and wherein a spacing between the first active material patches and the second active material patches increases gradually from a center of the jellyroll to an exterior of the jellyroll.

2. The battery of claim 1, wherein a spacing at the center of the jellyroll is between 0.1 and 1.5 millimeters, mm.

3. The battery of any one of claims 1 to 2, wherein a spacing at the exterior of the jellyroll is between 3 and 60 mm.

4. The battery of any one of claims 1 to 3, wherein the first electrode comprises two additional active material patches that precede the first active material patches and are printed on a single side of the first electrode.

5. The battery of any one of claims 1 to 4, wherein the second electrode comprises two additional active material patches that follow the second active material patches and are printed on a single side of the second electrode.

6. The battery of any one of claims 1 to 5, wherein the first electrode and the second electrode are wound together starting at a same side of the center of the jellyroll.

7. The battery of any one of claims 1 to 6, wherein the first electrode is an anode and the second electrode is a cathode.

8. The battery of any one of claims 1 to 7, wherein the battery is a secondary battery.

9. The battery of any one of claims 1 to 8, wherein the first electrode and the second electrode comprise prefolds between the first active material patches and the second active material patches.

10. The battery of claim 9, wherein the prefolds comprise at least one of creases, perforations, dimples, or bends.

11. The battery of claim 10, wherein the bends comprise a bending radius between 0.1 and 20 mm.

12. The battery of claim 10 or 11, wherein the bends comprise a bending radius that is 0.1 mm at a start of the winding and is one-half of a thickness of the jellyroll at an end of the winding.

13. The battery of any of claims 10 to 12, wherein the bends comprise a bending radius that is equal to the spacing divided by pi.

14. The battery of any one of claims 1 to 13, wherein the first electrode and the second electrode are wound together starting at opposite ends of the jellyroll and ending at the opposite ends of the jellyroll.

15. A method for manufacturing secondary cells, comprising:
identifying, on an electrode foil, locations to wind the electrode foil around a single mandrel;
marking the locations on thea electrode foil usingwith fiducials markersat positions aligned with a winding;
printing a plurality of electrode active material patches on the electrode foil aligned with theaccording to the fiducial markers;
baking the electrode active material patches;
slitting the electrode foil into a plurality of electrodes comprising aligned with the fiducials markers;
winding, using one or more separators, the plurality of electrodes with one or more separators on around thea single mandrel;, thereby
producing, based on the winding, a plurailty of secondary cells; and
separating the plurality of secondary cells from the single mandrel.
